# EUROPÄISCHE PATENTSCHRIFT

(11) **EP 1 520 464 B1**
(45) Veröffentlichungstag und Bekanntmachung des Hinweises auf die Patenterteilung: **28.05.2008**
(21) Anmeldenummer: 04104716.8
(22) Anmeldetag: 28.09.2004
(51) Int. Cl.: A01D 75/18, A01F 29/16

(54) **Häckseleinrichtung für einen Feldhäcksler**
Chopping device for forage harvester
Dispositif hacheur pour une faucheuse-hacheuse

(30) Priorität: 04.10.2003 DE 10346116
(43) Veröffentlichungstag der Anmeldung: 06.04.2005
(73) Patentinhaber: DEERE & COMPANY, Moline, Illinois 61265-8098 (US)
(72) Erfinder: Wolf, Helmut, 66482, Zweibrücken (DE); Kirsch, Marc, 57720, Epping (FR)
(74) Vertreter: Holst, Sönke

(56) Entgegenhaltungen:
- DE-A1- 4 134 957
- US-A- 4 503 643
- US-A- 5 209 025

## Beschreibung

Die Erfindung betrifft eine Häckseleinrichtung für einen Feldhäcksler, mit einer Schleifeinrichtung und einer an einem Gehäuse der Häckseleinrichtung angeordneten Abdeckeinrichtung, die mittels eines fremdkraftbetätigten Aktors zwischen einer Häckselposition, in der sie das Gehäuse verschließt, und einer Schleifposition bewegbar ist, in der sie die Häckseleinrichtung teilweise freigibt, so dass die Schleifeinrichtung mit der Häckseleinrichtung zusammenwirken kann.

Bei Feldhäckslern ist von Zeit zu Zeit ein Schleifen der Messer der Häckseleinrichtung sinnvoll, um sicherzustellen, dass die Messer hinreichend scharf sind. Auf diese Weise wird der Energiebedarf für das Häckseln gering und die Schnittqualität hoch gehalten. Die Häckseleinrichtung ist von einem Gehäuse umgeben, das mit Öffnungen zum Zuführen und Abgeben des Ernteguts versehen, ansonsten jedoch geschlossen ist, um einen Austritt des Häckselgutes an unerwünschter Stelle und Berührungen der Häckseleinrichtung durch den Bediener zu vermeiden. Damit die Schleifeinrichtung mit der Häckseleinrichtung zusammenwirken kann, ist im Stand der Technik eine Abdeckeinrichtung vorgesehen, die zwischen einer Häckselposition, in der sie das Gehäuse verschließt, so dass ein unerwünschter Zugang zur Häckseleinrichtung nicht möglich ist, und einer Schleifposition bewegt werden kann, in der sie eine Öffnung im Gehäuse freilässt, durch die die Schleifeinrichtung mit der Häckseleinrichtung zusammenwirken kann. In dieser Position kann auch eine visuelle Inspektion und ggf. ein Austausch der Messer vorgenommen werden.

Die Bewegung der Abdeckeinrichtung zwischen den genannten Positionen kann durch einen fremdkraftbetriebenen Aktor, insbesondere einen elektrischen Linearmotor (DE 41 34 957 A) oder einen rotierenden Elektromotor (EP 0 444 916 A) erfolgen, der über einen Antriebsmechanismus mit der Abdeckeinrichtung in Antriebsverbindung steht. Durch Sensoren, insbesondere Endschalter oder Linearpotentiometer, wird die Position der Abdeckeinrichtung erfasst und der Aktor entsprechend angesteuert. Die Abdeckeinrichtung wird somit ausschließlich durch den Aktor in der Häckselposition festgehalten.

Die US 4 503 643 A beschreibt eine weitere Häckseleinrichtung, bei der die Abdeckung des Gehäuses der Häckseltrommel gemeinsam mit der Schleifeinrichtung durch einen Verstellmotor entgegen der Drehrichtung der Häckseltrommel im normalen Erntebetrieb aus einer Häckselposition in eine Schleifposition verschwenkbar ist. In der Häckselposition liegt eine Kante der Abdeckung unter einer Halterung des Gehäuses, so dass die Abdeckung in radialer Richtung festgehalten wird. In der Drehrichtung der Häckseltrommel liegt die Abdeckung stirnseitig am Gehäuse an. Wenn die Häckseltrommel rückwärts gedreht wird, beispielsweise beim Reversieren, muss der Verstellmotor die auf die Abdeckung wirkenden Kräfte aufnehmen.

Bei bestimmten Betriebsbedingungen, insbesondere falls Erntegut nicht ordnungsgemäß am Auslass der Häckseleinrichtung abgegeben wird und mit ihr umläuft bzw. die Häckseleinrichtung verstopft, können relativ intensive Kräfte, die auch in Form von Impulsen oder Schlägen wirken können, auf die Abdeckeinrichtung ausgeübt und über den Antriebsmechanismus auf den Aktor und den Sensor zur Positionserfassung der Abdeckeinrichtung übertragen werden. Diese Kräfte können zur Beschädigung des Aktors bzw. Sensors führen.

Das der Erfindung zu Grunde liegende Problem wird darin gesehen, die genannten Probleme zu überwinden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Abdeckeinrichtung in der Häckselposition lösbar mit dem Gehäuse der Häckseleinrichtung zu verbinden, d. h. sie daran zu arretieren. Die Arretierungseinrichtung fixiert die Abdeckeinrichtung unabhängig von einer eventuellen Haltekraft des fremdkraftbetätigten Aktors gegenüber einer in Richtung auf die Schleifposition zu gerichteten Bewegung. Auf diese Weise erreicht man, dass eventuell auf die Abdeckeinrichtung wirkende Kräfte, die insbesondere durch sich aufstauendes Erntegut bedingt sein können, über die Arretierungseinrichtung abgeleitet und nicht bzw. in verringertem Maße auf den Aktor und ggf. den Sensor zur Erfassung der Position der Abdeckeinrichtung übertragen werden. Eine Beschädigung dieser Elemente ist somit nicht zu befürchten.

Es bietet sich an, den fremdkraftbetätigten Aktor, der die Abdeckeinrichtung bewegt, auch zum Festsetzen und Lösen der Arretierungseinrichtung zu verwenden. Der zeitliche Ablauf erfolgt in vorteilhafter Weise derart, dass der Aktor zum Öffnen der Abdeckeinrichtung zuerst die Arretierungseinrichtung in die Löseposition verbringt und danach die Abdeckeinrichtung in die Schleifposition bewegt. Analog wird zuerst die Abdeckeinrichtung in die Häckselposition verbracht und dann die Arretierungseinrichtung festgelegt.

Um dieses Verhalten zu erzielen, bietet sich die Verwendung einer Verbindung zwischen dem Aktor und der Abdeckeinrichtung an, die ein gewisses Leerspiel ermöglicht. Bewegt sich der Aktor innerhalb dieses Leerspiels, öffnet oder schließt er die Arretierung. Nach Überwindung des Leerspiels wird die Abdeckeinrichtung bewegt. Es kann durch beliebige mechanische Mittel erzielt werden, beispielsweise durch ein Langloch, in das ein Stift eingreift, oder durch einen geeigneten Nocken, der mit einem Gegenelement zusammenwirkt. Die Antriebsverbindung zwischen dem Aktor und der Arretierungseinrichtung kann starr oder mit einer Feder abgepuffert sein.

Die Arretierungseinrichtung umfasst in einer bevorzugten Ausführungsform der Erfindung ein Riegelelement, das sich linear in einer entsprechenden Führung bewegt, um ein Verkanten zu vermeiden. Das Riegelelement greift in der Arretierposition in eine ihm zugeordnete Öffnung ein. Dabei ist es beliebig, ob das Riegelelement an der Abdeckeinrichtung angebracht ist und in eine Öffnung des Gehäuses eingreift oder umgekehrt am Gehäuse angebracht ist und in eine Öffnung in der Abdeckeinrichtung eingreift. In einer anderen Ausführungsform vollführt das Riegelelement eine Drehbewegung.

Schließlich steht der fremdkraftbetriebene Aktor vorzugsweise über eine Welle mit der Abdeckeinrichtung und der Arretiereinrichtung in Verbindung. Der Aktor kann ein Linearmotor sein, der die Welle über eine Kurbel in Drehung versetzt, oder ein Rotationsmotor, der die Welle vorzugsweise über Zahnräder antreibt. Die Welle verschwenkt (dreht) die Abdeckeinrichtung zwischen der Häckselposition und der Schleifposition und bewegt auch die Arretiereinrichtung linear und/oder rotativ. In einer anderen Ausführungsform verschiebt der Aktor die Abdeckeinrichtung linear.

In den Zeichnungen ist ein nachfolgend näher beschriebenes Ausführungsbeispiel der Erfindung dargestellt. Es zeigt:
- Fig. 1: einen Feldhäcksler mit einer Häckseleinrichtung in Seitenansicht und in schematischer Darstellung,
- Fig. 2: einen vertikalen Schnitt durch die Häckseleinrichtung mit der an ihrer Oberseite angeordneten Schleifeinrichtung und der Abdeckeinrichtung,
- Fig. 3: eine perspektivische Ansicht der Abdeckeinrichtung in der Häckselposition,
- Fig. 4: eine seitliche Ansicht der Welle und der Abdeckeinrichtung mit den einen Bewegungsbereich des Aktors ohne Antrieb der Abdeckeinrichtung ermöglichenden Übertragungsmitteln, und
- Fig. 5: einen Schnitt durch die Führung des Riegelelements der Arretierungseinrichtung.

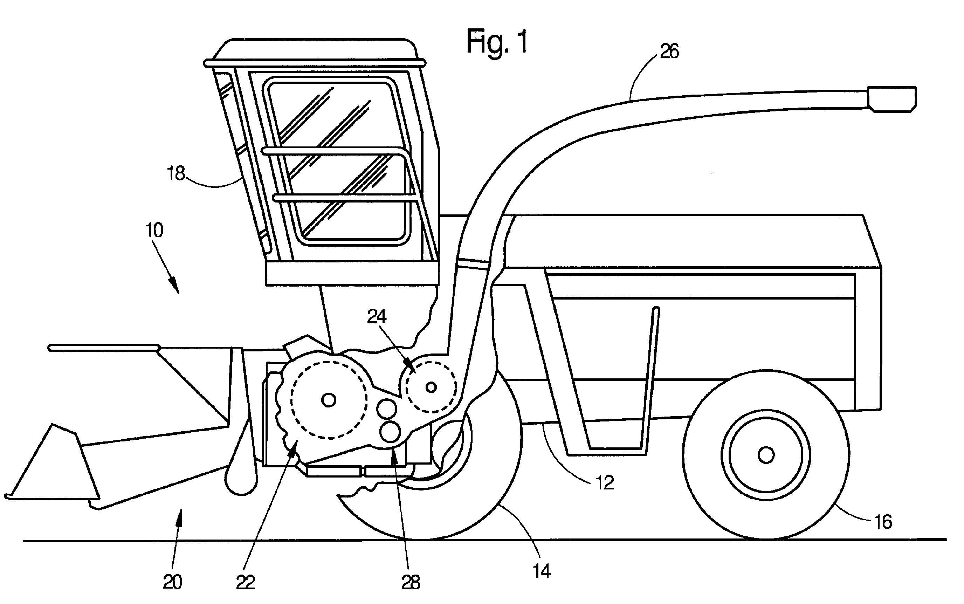

Ein in Figur 1 gezeigter selbstfahrender Feldhäcksler 10 baut sich auf einem Rahmen 12 auf, der von vorderen lenkbaren und rückwärtigen angetriebenen Rädern 14 und 16 getragen wird. Die Bedienung des Feldhäckslers 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseleinrichtung 22 in Form einer Häckseltrommel zugeführt, die es in kleine Stücke häckselt und einer Fördervorrichtung 24 aufgibt. Das Gut verläßt die Erntemaschine 10 zu einem nebenher fahrenden Anhänger über einen um die Hochachse drehbaren und höhenverstellbaren Austragsschacht 26. Zwischen der Häckseleinrichtung 22 und der Fördervorrichtung 24 ist eine (ausbaubare) Nachzerkleinerungsvorrichtung 28 angeordnet, durch die das zu fördernde Gut der Fördervorrichtung 24 tangential zugeführt wird. Die Erfindung könnte auch an einem gezogenen bzw. angebauten Feldhäcksler Verwendung finden.

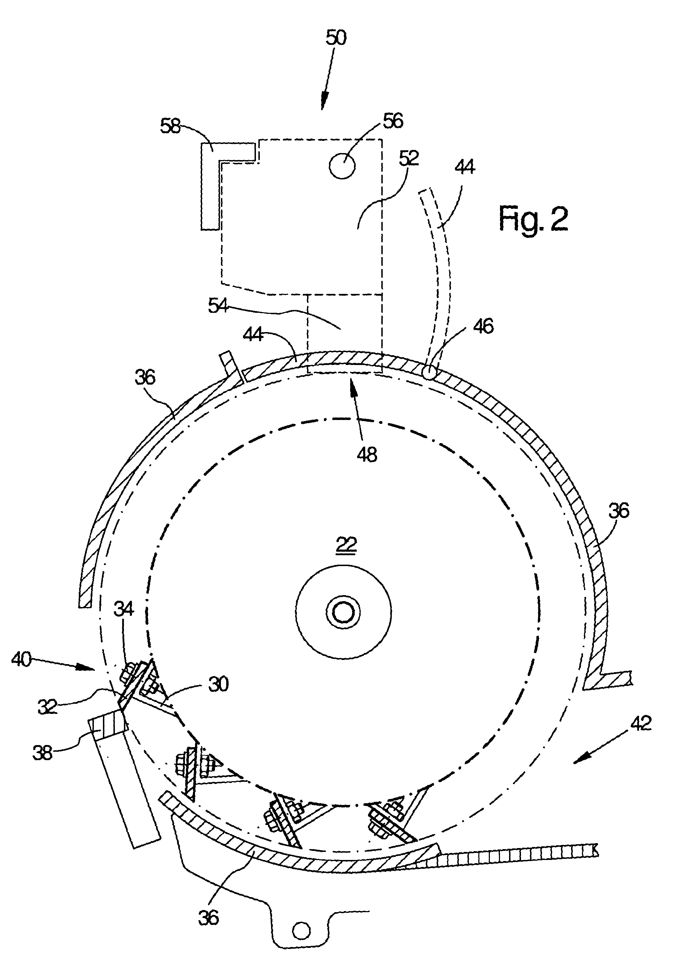

Die Figur 2 zeigt die Anbringung der Häckseleinrichtung 22, um deren Umfang Messerhalter 30 mit daran durch Schrauben 34 befestigten Messern 32 verteilt sind, in einem zur Drehachse der Häckseleinrichtung 22 etwa koaxialen, trommelförmigen Gehäuse 36. An einer Einlassöffnung 40 des Gehäuses 36, die von der Erntegutaufnahmevorrichtung 20 mit Erntegut beaufschlagt wird, ist eine Gegenschneide 38 angeordnet. Die Messer 32 zerteilen das Erntegut im Zusammenwirken mit der Gegenschneide 38. Das gehäckselte Erntegut erreicht dann durch eine Auslassöffnung 42 des Gehäuses 36 die Nachzerkleinerungsvorrichtung 28 bzw. bei ausgebauter Nachzerkleinerungsvorrichtung direkt die Fördervorrichtung 24.

An der Oberseite des Gehäuses 36 befindet sich eine Abdeckeinrichtung 44, die zwischen einer Häckselposition (durchgezogene Linien) und einer Schleifposition (gestrichelte Linien) um eine parallel zur Drehachse der Häckseleinrichtung 22 verlaufende Achse 46 schwenkbar gelagert ist. In der Häckselposition verschließt die Abdeckeinrichtung 44 das Gehäuse 36 nach oben, sodass dort kein Erntegut austreten kann und unbeabsichtigte Berührungen der Messer 32 durch einen Bediener nicht zu befürchten sind. In der Schleifposition ist die Abdeckeinrichtung nach oben verschwenkt und gibt eine Öffnung 48 an der Oberseite der Häckseleinrichtung 22 frei.

Durch die Öffnung 48 hindurch können die Messer 32 der Häckseleinrichtung 22 durch den Bediener optisch begutachtet werden. Außerdem kann eine Schleifeinrichtung 50, die sich aus einem Wagen 52 mit einem an seiner Unterseite angeordneten Schleifstein 54 sowie Führungselementen 56, 58 zusammensetzt, durch die Öffnung 48 auf die Messer 32 einwirken, wenn die Abdeckeinrichtung 44 sich in der Schleifposition befindet. Der Wagen 52 befindet in seiner Ruheposition seitlich neben der Häckseleinrichtung 22, sodass dann ein Verschwenken der Abdeckeinrichtung 44 ohne Kollision mit der Schleifeinrichtung 50 möglich ist. Beim Schleifen wird der Wagen 52 mit dem Schleifstein 54 durch die Führungselemente 56, 58, die sich parallel zur Drehachse der Häckseleinrichtung 22 erstrecken, entlang der Breite der (sich vorzugsweise entgegen der beim Erntebetrieb verwendeten Drehrichtung, die in Figur 2 im Gegenuhrzeigersinn verläuft, drehenden) Häckseleinrichtung 22 geführt, um die Messer 32 zu schärfen. Der Schleifvorgang kann durch den Bediener oder eine geeignete Sensorik, die unscharfe Messer 32 erkennt, veranlasst werden (s. DE 102 35 919 A und dort genannte Referenzen). Die Einzelheiten der Schleifeinrichtung 50 sind in der DE 199 10 757 A offenbart.

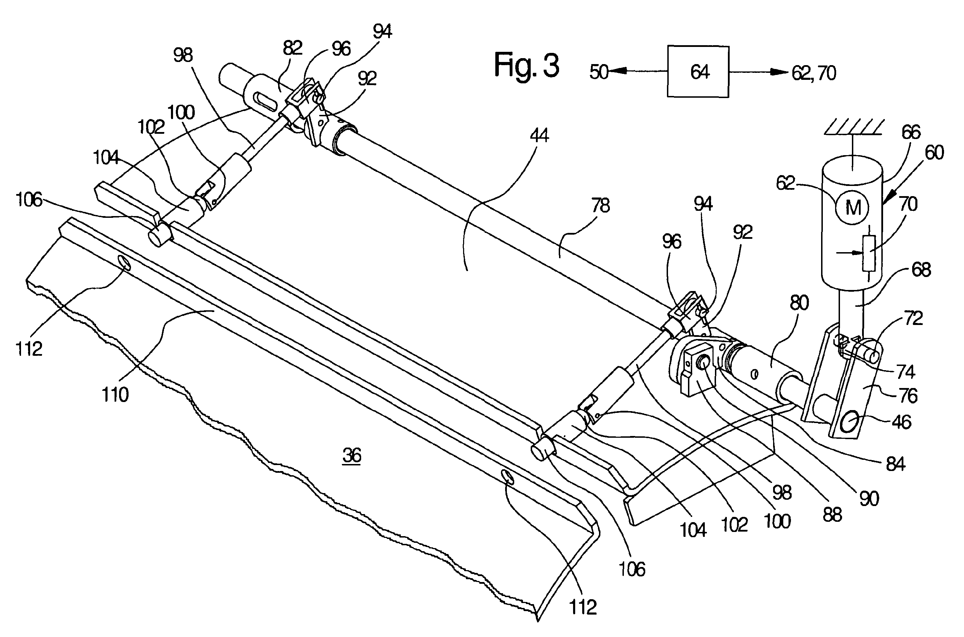

Es ist erkennbar, dass vor einem Schleifvorgang die Abdeckeinrichtung 44 in die Schleifposition zu verbringen ist, während sie vor der Wiederaufnahme des Erntebetriebs in die Häckselposition zurückzubringen ist. Die Bewegung der Abdeckeinrichtung 44 erfolgt mittels eines fremdkraftbetätigten Aktors 60 und einer Mechanik, die in der Figur 3 dargestellt sind. Dadurch kann der Schleifvorgang automatisch bzw. durch den Bediener in der Fahrerkabine 18 veranlasst und selbsttätig durchgeführt werden, ohne dass der Bediener die Fahrerkabine 18 verlassen müsste. Eine die Schleifeinrichtung 50 kontrollierende, schematisch dargestellte elektronische Steuerung 64 steuert somit auch den fremdkraftbetätigten Aktor 60 der Abdeckeinrichtung 44, um sie vor dem Schleifvorgang in die Schleifposition und anschließend in die Häckselposition zu verbringen.

Der Aktor 60 ist ein an sich bekannter Linearmotor, der einen Elektromotor 62 enthält, dessen Drehbewegung durch geeignete Elemente, wie eine Zahnstange, die mit einem vom Elektromotor 62 angetriebenen Zahnrad zusammenwirkt, in eine Linearbewegung umgesetzt wird. Der Elektromotor 62 ist in einem Gehäuse 66 angeordnet, das sich bezüglich der Fahrtrichtung des Feldhäckslers 10 seitlich neben der Abdeckeinrichtung 44 befindet und vertikal erstreckt. Das Gehäuse 66 ist an seiner Oberseite direkt oder indirekt mit dem Rahmen 12 des Feldhäckslers 10 verbunden. An der Unterseite des Gehäuses 66 befindet sich eine Antriebsstange 68, die durch den Elektromotor 62 in vertikaler Richtung bewegt werden kann. Im Gehäuse 66 (oder außerhalb davon) befindet sich ein Sensor 70 in Form eines Dreh- oder Linearpotentiometers, der zur Erfassung der aktuellen Position der Antriebsstange 68 eingerichtet ist. Der Elektromotor 62 und der Sensor 70 sind mit der elektronischen Steuerung 64 verbunden, die auch die Schleifeinrichtung 50 steuert, wie in der Figur 3 schematisch angedeutet wird. Anstelle eines linear wirkenden Aktors 60 könnte auch ein rotierender Aktor verwendet werden. Anstelle eines elektrischen Antriebs kommt auch ein pneumatischer oder hydraulischer Antrieb des Aktors 60 in Frage.

Die Antriebsstange 68 ist über einen Zapfen 72, der ein sich horizontal und in Fahrtrichtung des Feldhäckslers 10 erstreckendes Langloch 74 an der Unterseite der Antriebsstange 68 durchdringt, an einem Schwenkhebel 76 angelenkt. Der Schwenkhebel 76 ist an einer Welle 78 befestigt, die sich parallel zur Drehachse der Häckseleinrichtung 22 erstreckt. Die Welle 78 ist durch nicht eingezeichnete Lagerungen an ihren beiden Enden am Rahmen 12 um ihre Längsachse, die der Achse 46 entspricht, drehbar gelagert. Das Langloch 74 und der Zapfen 72 ermöglichen eine Umsetzung der Linearbewegung der Antriebsstange 68 in eine Schwenkbewegung der Welle 78. Hierfür kommen auch beliebige andere Mittel in Frage, wie ein Gelenk.

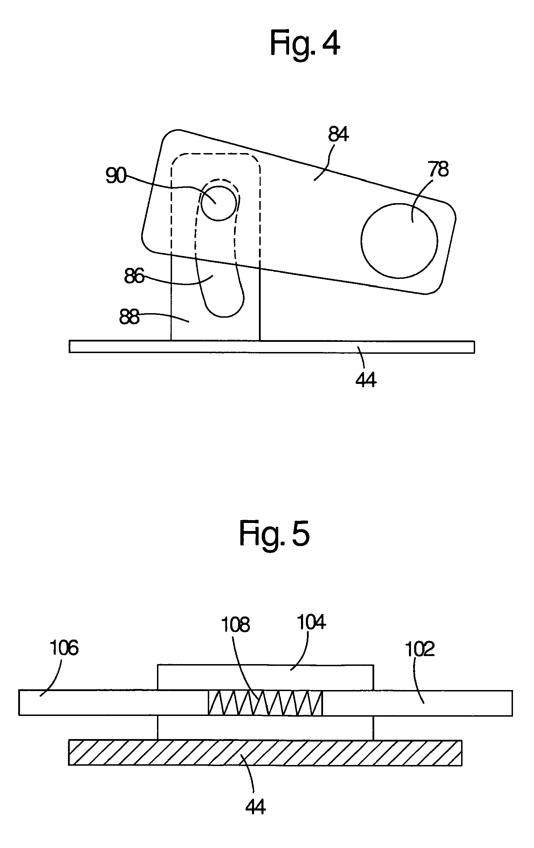

Die Welle 78 ist weiterhin durch zwei Lager 80, 82 drehbar an der Abdeckeinrichtung 44 gelagert. Die Antriebsverbindung zwischen der Welle 78 und der Abdeckeinrichtung 44 erfolgt, wie in der Figur 4 dargestellt, durch eine Langlochverbindung, die der Welle 78 einen anfänglichen Drehbereich einräumt, in dem die Abdeckeinrichtung 44 noch nicht bewegt wird. Diese Langlochverbindung setzt sich aus einem auf die Welle 78 aufgesetzten Hebel 84 zusammen, in dem das sich vertikal erstreckende Langloch 86 angeordnet ist, sowie aus einem an der Abdeckeinrichtung 44 befestigten Halter 88, der seitlich neben dem Hebel 84 angeordnet ist und einen sich parallel zur Achse 46 erstreckenden Zapfen 90 trägt, der in das Langloch 86 eingreift.

An der Welle 78 sind weiterhin zweite Hebel 92 befestigt, die an ihren Außenseiten Öffnungen aufweisen, durch die sich an Gabeln 96 angebrachte, sich parallel zur Achse 46 erstreckende Zapfen 94 erstrecken. Diese Öffnungen sind als Langlöcher ausgeführt. Die Gabeln 96 sind an sich etwa horizontal und nach vorn erstreckenden Stangen 98 angebracht. Die Stangen 98 sind über Gelenke 100 mit zweiten Stangen 102 verbunden. Die Gelenke 100 sind in sich um parallel zur Achse 46 verlaufende Achsen beweglich. Die zweiten Stangen 102 erstrecken sich ebenfalls etwa horizontal und nach vorn. In der dargestellten Ausführungsform sind die Stangen 98 längenverstellbar. Dieses Merkmal ist aber nicht unbedingt erforderlich, so dass auch nicht verstellbare Stangen 98 verwendet werden können. Die zweiten Stangen 102 erstrecken sich in zylindrische, an der Abdeckeinrichtung 44 befestigte Führungen 104 hinein, an deren gegenüberliegenden Enden zylindrische, zu den Führungen 104 und den zweiten Stangen 102 koaxiale Riegelelemente 106 gelagert sind. Wie in der Figur 5 erkennbar, ist innerhalb jeder der Führungen 104 zwischen den zweiten Stangen 102 und den Riegelelementen 106, die beide in der Führung 104 verschiebbar gelagert sind, eine vorgespannte schraubenförmige Feder 108 angeordnet, die bestrebt ist, die Riegelelemente 106 von den zweiten Stangen 102 fortzudrücken.

An der Rückseite des Teils des Gehäuses 36, der sich in Fahrtrichtung unmittelbar vor der Abdeckeinrichtung 44 befindet, ist ein nach oben abgewinkelter Rand 110 vorgesehen. In dem Rand sind zwei zylindrische Öffnungen 112 eingebracht, die sich koaxial zu den Riegelelementen 106 erstrecken.

Die folgende Funktionsbeschreibung geht davon aus, dass sich der fremdkraftbetätigte Aktor 60 zunächst in seiner oberen Endstellung befindet. Dann befinden sich die Welle 78 und die mit ihr gekoppelten Hebel 84, 92 in der in Figur 3 dargestellten Position. Die Riegelelemente 106 durchdringen die Öffnungen 112 im Rand 110 des Teils des Gehäuses 36 vor der Abdeckeinrichtung 44. Somit befindet sich die Abdeckeinrichtung 44 in der Häckselposition und ist durch die Riegelelemente 106 am Gehäuse 36 arretiert. Falls in unbeabsichtigter Weise Erntegut mit um die Häckseleinrichtung 22 herum geführt wird oder diese sogar verstopft, so dass relativ hohe radiale und/oder tangentiale Kräfte auf die Abdeckeinrichtung 44 wirken, werden diese Kräfte durch die Riegelelemente 106 auf das Gehäuse 36 abgeleitet und nicht oder zumindest in einem verringerten Maß durch den Aktor 60 aufgenommen. Beschädigungen des Aktors 60 oder des Sensors 70 sind daher nicht zu befürchten.

Veranlasst die Steuerung 64 selbsttätig oder auf eine Bedienereingabe hin einen Schleifvorgang, wird der Aktor 60 aktiviert. Er bewegt die Antriebsstange 68 nach unten, deren Bewegung über das Langloch 74 und den Zapfen 72 auf den Schwenkhebel 76 übertragen wird. Letzterer bewirkt eine Drehung der Welle 78, die in Figur 3 im Uhrzeigersinn erfolgt. Aufgrund der Positionen des Hebels 84, des Langlochs 86 und des Zapfens 90 erfolgt zunächst noch keine Übertragung der Bewegung auf den Halter 88 und die Abdeckeinrichtung 44, sondern nur eine Bewegung des Langlochs 86 gegenüber dem Zapfen 90. Die Abdeckeinrichtung 44 wird somit noch nicht angehoben.

Andererseits wird die Drehung der Welle 78 über die zweiten Hebel 92, die Zapfen 94 und die Gabeln 96 in eine Linearbewegung verwandelt, die über die ersten Stangen 98, die Gelenke 100, die zweiten Stangen 102 und die Feder 108 auf die Riegelelemente 106 übertragen wird. Die Riegelelemente 106 werden somit entgegen der Fahrtrichtung nach hinten bewegt und aus den Öffnungen 112 herausgezogen. Dadurch wird die von den in diesem Absatz genannten Elementen gebildete Arretierungseinrichtung gelöst und die Abdeckeinrichtung 44 ist nicht mehr am davor gelegenen Teil des Gehäuses 36 arretiert.

Die Positionen des Hebels 84, des Langlochs 86 und des Zapfens 90 sind derart gewählt, dass eine Übertragung der Drehbewegung der Welle 78 auf den Halter 88 und die Abdeckeinrichtung 44 erst dann (d. h. geringfügig später) erfolgt, nachdem die Arretierung der Riegelelemente 106 aus den Öffnungen 112 gelöst ist. Anschließend wird die Abdeckeinrichtung 44 entgegen der Schwerkraft nach oben und hinten in die Schleifposition gedreht. Die Position der Antriebsstange 68 wird dabei durch den Sensor 70 erfasst und kontinuierlich durch die Steuerung 64 überwacht. Letztere veranlasst das Abschalten des Aktors 60, sobald die Abdeckeinrichtung 44 die Schleifposition erreicht hat.

Nunmehr kann der Schleifvorgang oder eine Inspektion der Messer 32 durch den Bediener erfolgen. Da sich die Abdeckeinrichtung 44 in einer definierten Position im Abstand von der Schleifeinrichtung 50 befindet, besteht die Möglichkeit, an der äußeren Stirnseite der Abdeckeinrichtung 44 Dichtelemente (nicht eingezeichnet) anzuordnen, die von den beim Schleifen auftretenden Funken relativ wenig beeinflusst werden. Sie ermöglichen in der Häckselposition eine verbesserte Abdichtung des Gehäuses 36 durch die Abdeckeinrichtung 44.

Nach Beendigung des Schleifvorgangs oder der anderen Arbeiten wird die Abdeckeinrichtung 44, durch die Steuerung 64 gesteuert, wieder in die Häckselposition verbracht. Dazu wird der Aktor 60 veranlasst, die Antriebsstange 68 anzuheben. Die Welle 78 in Figur 3 dreht sich dann im Gegenuhrzeigersinn. Die Abdeckeinrichtung 44 sinkt durch die Schwerkraft und/oder die Einwirkung des Hebels 84 auf den Zapfen 90 nach vorn und unten ab und erreicht schließlich die Häckselposition. Das Langloch im zweiten Hebel 92, in das die Zapfen 94 eingreifen, ist derart dimensioniert, dass die Riegelelemente 106 sich erst dann über den Rand der Abdeckeinrichtung 44 nach vorn erstrecken, wenn die Häckselposition erreicht ist, da die Riegelelemente 106 vorher nicht in die Öffnungen 112 eintreten können. Die Federn 108 verhindern, dass Elemente der Arretierungseinrichtung beschädigt werden, wenn die Öffnungen 112 und die Riegelelemente 106 aus irgendwelchen Gründen nicht miteinander ausgerichtet sind. Es wäre aber auch denkbar, auf die Federn 108 zu verzichten.

Somit dringen die Riegelelemente 106 wieder in die Öffnungen 112 und die Abdeckeinrichtung 44 wird durch den Aktor 60 in der Häckselposition arretiert.

## Patentansprüche

1. Häckseleinrichtung (22) für einen Feldhäcksler, mit einer Schleifeinrichtung (50) und einer an einem Gehäuse (36) der Häckseleinrichtung (22) angeordneten Abdeckeinrichtung (44), die mittels eines fremdkraftbetätigten Aktors (60) zwischen einer Häckselposition, in der sie das Gehäuse (36) verschließt, und einer Schleifposition bewegbar ist, in der sie die Häckseleinrichtung (22) teilweise freigibt, so dass die Schleifeinrichtung (50) mit der Häckseleinrichtung (22) zusammenwirken kann, **gekennzeichnet durch** eine Arretierungseinrichtung, die eingerichtet ist, die Abdeckeinrichtung (44) in der Häckselposition unabhängig vom Aktor (60) gegenüber einer in Richtung auf die Schleifposition zu gerichteten Bewegung zu arretieren.

2. Häckseleinrichtung (22) nach Anspruch 1, **dadurch gekennzeichnet, dass** die Arretierungseinrichtung durch den fremdkraftbetätigten Aktor (60) betätigbar ist.

3. Häckseleinrichtung (22) nach Anspruch 2, **dadurch gekennzeichnet, dass** der fremdkraftbetätigte Aktor (60) bei einer Aktivierung zur Bewegung der Abdeckeinrichtung (44) aus der Häckselposition in die Schleifposition zunächst die Arretierung löst und dann die Abdeckeinrichtung (44) bewegt.

4. Häckseleinrichtung (22) nach Anspruch 2 oder 3, **dadurch gekennzeichnet, dass** der fremdkraftbetätigte Aktor (60) bei einer Aktivierung zur Bewegung der Abdeckeinrichtung (44) aus der Schleifposition in die Häckselposition zunächst die Abdeckeinrichtung (44) bewegt und dann die Arretierung festlegt.

5. Häckseleinrichtung (22) nach Anspruch 3 oder 4, **dadurch gekennzeichnet, dass** der fremdkraftbetätigte Aktor (60) durch eine Verbindung mit der Abdeckeinrichtung (44) verbunden ist, die dem Aktor (60) einen Bewegungsraum zum Lösen und/oder Festlegen der Arretierung ermöglicht, ohne dass eine Bewegungsübertragung auf die Abdeckeinrichtung (44) erfolgt.

6. Häckseleinrichtung (22) nach Anspruch 5, **dadurch gekennzeichnet, dass** die Verbindung zwischen dem fremdkraftbetätigten Aktor (60) und der Abdeckeinrichtung (44) ein Langloch (86) und ein darin eingreifendes Element (90) umfasst.

7. Häckseleinrichtung (22) nach einem der Ansprüche 1 bis 6, **dadurch gekennzeichnet, dass** die Arretierungseinrichtung ein in einer Führung (104) bewegbares Riegelelement (106) umfasst, das mit einer Öffnung (112) zusammenwirkt.

8. Häckseleinrichtung (22) nach einem der Ansprüche 1 bis 7, **dadurch gekennzeichnet, dass** der fremdkraftbetriebene Aktor (60) betreibbar ist, eine Welle in Drehung zu versetzen, die wiederum mit der Arretierungseinrichtung und der Abdeckeinrichtung (44) in Antriebsverbindung steht.

9. Feldhäcksler (10) mit einer Häckseleinrichtung (22) nach einem der vorhergehenden Ansprüche.

## Claims

1. Chopping device (22) for a forage harvester, with a grinding device (50) and a covering device (44) which is arranged on a housing (36) of the chopping device (22) and is movable, by means of an actuator (60) actuated by external force, between a chopping position, in which it closes the housing (36), and a grinding position, in which it partially opens up the chopping device (22) such that the grinding device (50) can interact with the chopping device (22), **characterized by** a locking device which is set up so as, independently of the actuator (60), to lock the covering device (44) in the chopping position in relation to a movement to be directed towards the grinding position.

2. Chopping device (22) according to Claim 1, **characterized in that** the locking device can be actuated by the actuator (60) which is actuated by external force.

3. Chopping device (22) according to Claim 2, **characterized in that** the actuator (60) which is actuated by external force, when activated so as to move the covering device (44) from the chopping position into the grinding position, first of all releases the lock and then moves the covering device (44).

4. Chopping device (22) according to Claim 2 or 3, **characterized in that** the actuator (60) which is actuated by external force, when activated so as to move the covering device (44) from the grinding position into the chopping position, first of all moves the covering device (44) and then secures the lock.

5. Chopping device (22) according to Claim 3 or 4, **characterized in that** the actuator (60) which is actuated by external force is connected to the covering device (44) by a connection which makes it possible for the actuator (60) to have a movement clearance for releasing and/or securing the lock without movement being transmitted to the covering device (44).

6. Chopping device (22) according to Claim 5, **characterized in that** the connection between the actuator (60) which is actuated by external force and the covering device (44) comprises a slot (86) and an element (90) engaging therein.

7. Chopping device (22) according to one of Claims 1 to 6, **characterized in that** the locking device comprises a locking element (106) which is movable in a guide (104) and interacts with an opening (112).

8. Chopping device (22) according to one of Claims 1 to 7, **characterized in that** the actuator (60) which is operated by external force can be operated so as to rotate a shaft which, in turn, is in driving connection with the locking device and the covering device (44).

9. Forage harvester (10) with a chopping device (22) according to one of the preceding claims.

## Revendications

1. Dispositif hacheur (22) pour une faucheuse-hacheuse, comportant un dispositif d'affûtage (50) et un dispositif de protection (44), qui est monté sur un carter (36) du dispositif hacheur (22) et qui peut être déplacé par un actionneur (60), activé par une force extérieure, entre une position de hachage, dans laquelle il ferme le carter (36), et une position d'affûtage, dans laquelle il libère en partie le dispositif hacheur (22), de telle sorte que le dispositif d'affûtage (50) peut coopérer avec le dispositif hacheur (22), **caractérisé par** un dispositif d'arrêt, qui est conçu pour bloquer, indépendamment de l'actionneur (60), le dispositif de protection (44) dans la position de hachage en empêchant un mouvement orienté en direction de la position d'affûtage.

2. Dispositif hacheur (22) selon la revendication 1, **caractérisé en ce que** le dispositif d'arrêt peut être actionné par l'actionneur (60) activé par une force extérieure.

3. Dispositif hacheur (22) selon la revendication 2, **caractérisé en ce que**, lorsque l'actionneur (60), activé par une force extérieure, est activé pour déplacer le dispositif de protection (44) hors de la position de hachage dans la position d'affûtage, l'actionneur (60) désactive d'abord le blocage, puis déplace le dispositif de protection (44).

4. Dispositif hacheur (22) selon la revendication 2 ou 3, **caractérisé en ce que**, lorsque l'actionneur (60), activé par une force extérieure, est activé pour déplacer le dispositif de protection (44) hors de la position d'affûtage dans la position de hachage, l'actionneur (60) déplace d'abord le dispositif de protection (44), puis engage le blocage.

5. Dispositif hacheur (22) selon la revendication 3 ou 4, **caractérisé en ce que** l'actionneur (60), activé par une force extérieure, est relié au dispositif de protection (44) par une liaison qui permet à l'actionneur (60) de se déplacer dans une zone de mouvement pour désactiver et/ou engager le blocage, sans que le mouvement soit transmis au dispositif de protection (44).

6. Dispositif hacheur (22) selon la revendication 5, **caractérisé en ce que** la liaison entre l'actionneur (60), activé par une force extérieure, et le dispositif de protection (44) comporte un trou oblong (86) et un élément (90) s'engageant dans celui-ci.

7. Dispositif hacheur (22) selon l'une quelconque des revendications 1 à 6, **caractérisé en ce que** le dispositif d'arrêt comporte un élément de verrouillage (106), mobile dans un guidage (104) et coopérant avec une ouverture (112).

8. Dispositif hacheur (22) selon l'une quelconque des revendications 1 à 7, **caractérisé en ce que** l'actionneur (60), activé par une force extérieure, peut être utilisé pour entraîner en rotation un arbre qui est également en liaison d'entraînement avec le dispositif d'arrêt et le dispositif de protection (44).

9. Faucheuse-hacheuse (10) avec un dispositif hacheur (22) selon l'une des revendications précédentes.
